# EUROPEAN PATENT APPLICATION

(11) **EP 3 306 806 A1**
(43) Date of publication of application: **11.04.2018**
(21) Application number: 16802832.2
(22) Date of filing: 06.01.2016
(51) Int. Cl.: H02P 6/16

(54) **POWER CONVERSION DEVICE AND POWER CONVERSION DEVICE CONTROL METHOD**

(30) Priority: 29.05.2015 JP 2015109313
(71) Applicant: Hitachi Industrial Equipment Systems Co., Ltd., Tokyo 101-0022 (JP)
(72) Inventor: IWASE, Yuuta, Tokyo 101-0022 (JP); TAGUCHI, Yoshiyuki, Tokyo 101-0022 (JP)
(74) Representative: Addiss, John William
(86) International application number: PCT/JP2016/050176
(87) International publication number: WO 2016/194393

(57) **Abstract**

Provided is a power conversion device mounted with a function for detecting a step-out of a rotating machine which contains permanent magnets, and also provided is a device (for example, a rotating machine drive device, a refrigeration device, etc.) using the power conversion device. The power conversion device is equipped with a control device for determining, on the basis of a signal detected by a magnetic pole position sensor attached to any one of the phases of a motor, whether or not the motor is in a step-out state. Further, the power conversion device is characterized in that the control device determines, on the basis of whether or not the signal detected by the magnetic pole position sensor satisfies a predetermined condition within a preset predetermined time, whether or not the motor is in the step-out state.

## Description

### TECHNICAL FIELD

The present invention relates to a power conversion device and a control method of the power conversion device.

### BACKGROUND ART

A permanent magnetic synchronous motor with high efficiency compared to a conventional induction motor comes into wide use in an industry field and a refrigeration machine. Herein, the permanent magnetic synchronous motor rotates when a rotating magnetic field is input to be synchronized with a magnetic pole position of a permanent magnetic in the rotor. In a state where the magnetic pole position and the rotating magnetic field are not synchronized, the motor does not rotate, and becomes out of phase and uncontrollable. Therefore, there is a need to provide a power conversion device which can detect the magnetic pole position to control the operation of the permanent magnetic synchronous motor. Examples of means that detects the magnetic pole position include a magnetic pole position sensor, for example. Examples of a magnetic pole sensor include an encoder, a resolver, and a hall element. The magnetic pole sensor inputs at least two pieces of positional information per rotation of the rotor to the power conversion device, and controls the operation while recognizing the magnetic pole position.

On the other hand, in recent years, the operation may be controlled in a magnetic pole position sensor-less system without the magnetic pole position sensor. In the case of the magnetic pole position sensor-less system, the control is performed while estimating the magnetic pole position on the basis of a phase of a detected current, for example. Therefore, the rotor of the permanent magnetic synchronous motor may not be synchronized with the rotating magnetic field created by the power conversion device at the time when a load varies and is heavy, and thus the motor may become out of phase. When the out-of-phase occurs in the magnetic pole position sensor-less system in which the magnetic pole position is just estimated, the out-of-phase state may not be able to be detected. Therefore, there is a need to provide a power conversion device which can securely detect an occurrence of the out-of-phase in the magnetic pole position sensor-less system.

As a conventional detection method of the out-of-phase, Patent Literature 1 (JP 2000-295886 A) discloses "an out-of-phase detecting unit which detects whether an angular difference between an angular position of a magnetic field axis of the rotor obtained on the basis of a detection signal of the magnetic pole position sensor and an angle of the rotating magnetic field exceeds a preset value. Patent Literature 2 (JP 2014-147239 A) discloses "a power conversion device including: an axial error estimator which estimates an axial error between a control axis and a magnetic axis of the rotor of the synchronous motor on the basis of the voltage command and a current detected by the current detector; a frequency component extractor which extracts an arbitrary frequency component of the axial error estimated by the axial error estimator; and an out-of-phase determining unit which determines whether the motor is out of phase on the basis of the frequency component extracted by the frequency component extractor.

### CITATION LIST

### PATENT LITERATURE

PATENT LITERATURE 1: JP 2000-295886 A
PATENT LITERATURE 2: JP 2014-147239 A

### SUMMARY OF INVENTION

### TECHNICAL PROBLEM

However, in the technique of Patent Literature 1, three signals of Pu, Pv, and Pw are detected from the magnetic pole position sensor in order to detect the out-of-phase. Therefore, there is a need to provide a sensor which can detect three-phase magnetic pole positions, and thus cost-up cannot be avoided.

In addition, in a case where the rotor is slightly rotated by harmonic components of an applied voltage command frequency, for example, there is a possibility that the out-of-phase cannot be detected in the technique of Patent Literature 2.

Then, an object in this application is to provide a power conversion device and a control method of the power conversion device which is able to detect the out-of-phase with high reliability without using a three-phase magnetic pole position detecting sensor.

### SOLUTION TO PROBLEM

To solve the above problem, there is provided, for example, a power conversion device, including: a control device that determines whether a motor is out of phase on the basis of a signal detected by a magnetic pole position sensor attached to any one phase of the motor.

### ADVANTAGEOUS EFFECTS OF INVENTION

According to the present invention, it is possible to provide a power conversion device and a control method of the power conversion device which is able to detect an out-of-phase with high reliability without using a three-phase magnetic pole position detecting sensor.

### BRIEF DESCRIPTION OF DRAWINGS

[FIG.1] FIG. 1 is a diagram schematically illustrating a configuration of a power conversion device of a first embodiment according to the present invention.
[FIG.2]FIG. 2 is a timing chart illustrating three-phase signals of a magnetic pole sensor of a speed reproduction unit 11 in the first embodiment.
[FIG.3] FIG. 3 is a timing chart illustrating a one-phase signal of the magnetic pole sensor of the speed reproduction unit 11 in the first embodiment.
[FIG.4]FIG. 4 is a block diagram of an out-of-phase determiner or detector 8 in the first embodiment.
[FIG.5]FIG. 5 is a block diagram of a speed controller 9 in the first embodiment.
[FIG.6]FIG. 6 is a diagram schematically illustrating a configuration of the power conversion device.
[FIG.7]FIG. 7 is a flowchart of a normal process.
[FIG.8]FIG. 8 is a flowchart of an out-of-phase determination process.
[FIG.9]FIG. 9 is a flowchart of an out-of-phase protection process.

### DESCRIPTION OF EMBODIMENTS

A power conversion device of this embodiment is suitably applied to, for example, a drive device of a rotary machine and a refrigerator. In the following, the description will be given about control in detail.

### First embodiment

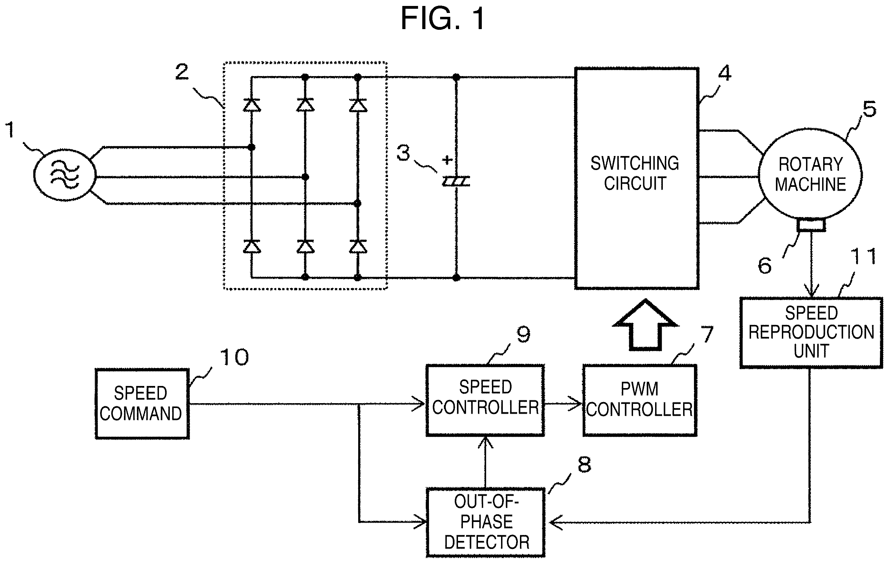

A first embodiment will be described using FIGS. 1 to 4.

A schematic configuration of the power conversion device is illustrated is FIG. 1. This power conversion device is a device which switches an AC power source 1 to a DC power source to supply DC power to a switching circuit 4 and causes the switching circuit 4 to perform a switching operation to operate a rotary machine 5. In a case where the rotary machine 5 is out of phase, the out-of-phase of the rotary machine 5 is detected by a magnetic pole position sensor 6, a speed reproduction unit 11, and an out-of-phase determiner 8 and performs a protection operation.

### (As to configuration of device)

This power conversion device is configured to include a rectifier 2 which is connected to the AC power source 1, a smoothing capacitor 3 which is connected in series to a DC side of the rectifier 2, the switching circuit 4 which converts AC power into DC power, a PWM controller 7 which controls the switching circuit 4, the magnetic pole position sensor 6 which is connected to the rotary machine 5, the speed reproduction unit 11 which creates a detection speed from any one-phase signal of the magnetic pole position sensor 6, a speed command 10 which receives an arbitrary speed from the outside or the like, the out-of-phase determiner 8 which determines the out-of-phase from the speed command 10, that is, detects that the out-of-phase has taken place, and the detection speed created by the speed reproduction unit 11 and outputs an out-of-phase detection signal, and the speed controller 9 which outputs a PWM control signal to the PWM controller 7 on the basis of the speed command 10 and the out-of-phase detection signal.

### (As to magnetic pole position sensor)

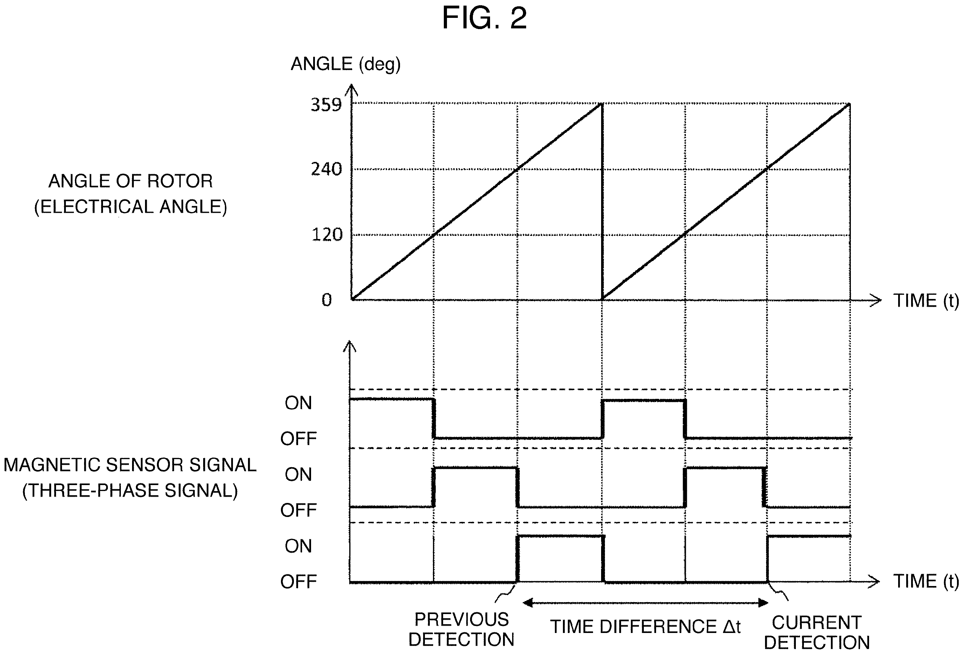

FIG. 2 is a timing chart illustrating a relation between a rotor angle of the rotary machine 5 and a magnetic pole sensor signal (three-phase signals) which is output from the magnetic pole position sensor 6 to the speed reproduction unit 11 according to the rotor angle. As a conventional technique, there is well known a technique in which a rotation speed, a rotation direction, and a magnetic pole position of the rotary machine 5 are detected using the three-phase signals of the magnetic pole sensor so as to perform variable speed control. However, the one-phase signal of the magnetic pole sensor may be used to detect the out-of-phase without using the three-phase signals. Therefore, only one-phase signal of the three-phase signals of the magnetic pole sensor in the related art is detected to determine the out-of-phase. Alternatively, there is no problem even when the out-of-phase is detected using the magnetic pole sensor which outputs only the one-phase signal.

### (As to speed reproduction unit)

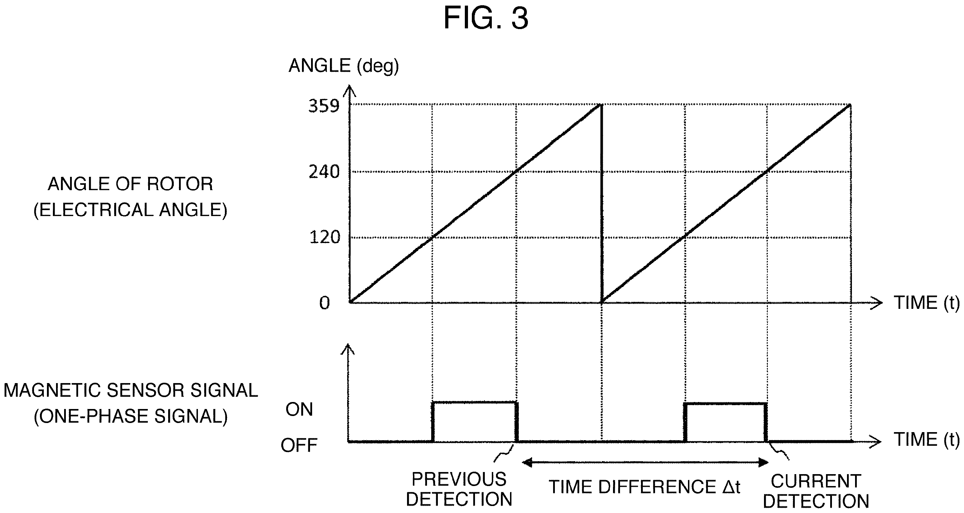

FIG. 3 is a timing chart illustrating a relation between the rotor angle of the rotary machine 5 and the magnetic pole sensor signal (one-phase signal) which is output from the magnetic pole position sensor 6 to the speed reproduction unit 11 according to the rotor angle. Since the magnetic pole position sensor 6 turns on and off the signal whenever the rotor of the rotary machine 5 rotates and a permanent magnetic passes through near the magnetic pole position sensor 6, the speed reproduction unit 11 detects, for example, a falling edge of the OFF signal every time in accordance with the rotation of the rotor of the rotary machine 5, and measures a time difference Δt from the previous detection to the current detection. Herein, there is no problem even if the time difference is measured for a rising edge or between both of the falling edge and the rising edge of the ON signal. In a case where the time difference between both of the rising edge and the falling edge is measured, the number of times of detection in a rotation of the rotor of the rotary machine 5 becomes twice, so that it is possible to improve a detection accuracy of the speed reproduction unit 11. A frequency is calculated by the measured time difference Δt, and output as the detection speed of the rotary machine 5.

### (As to out-of-phase measurement)

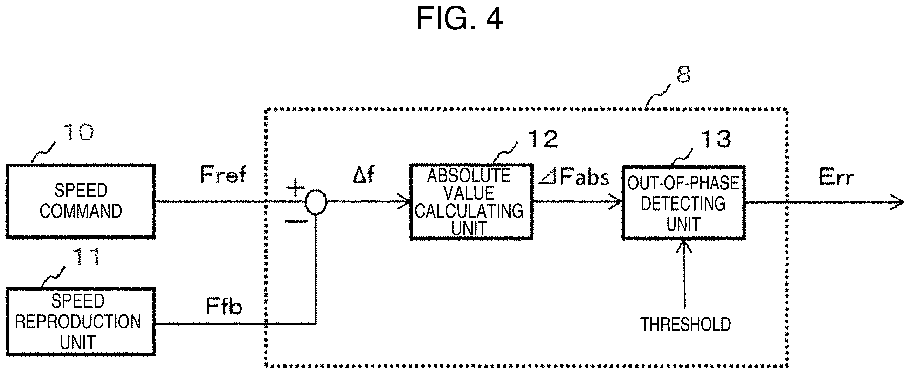

FIG. 4 is a block diagram of the out-of-phase determiner 8. The out-of-phase determiner 8 is configured to include an absolute value calculating unit 12 and an out-of phase determining unit 13 which determines the out-of-phase on the basis of the result output from the absolute value calculating unit 12.

A detection speed Ffb input by the speed reproduction unit 11 is subtracted from a speed command Fref input by the speed command 10, and a speed deviation Δf is calculated. In consideration of a case where the detection speed Ffb becomes larger than the speed command Fref when a load is suddenly lightened or at the time of deceleration, the speed deviation Δf calculates an absolute value using the absolute value calculating unit 12 as a speed deviation absolute value ΔFabs. The calculated speed deviation absolute value ΔFabs is compared with an arbitrary predetermined time which is used as a threshold set in a micro computer in advance by the out-of-phase determining unit 13, or in a nonvolatile memory such as a flash memory. In a case where the speed deviation absolute value falls within the predetermined time, it is determined to be normal, and in a case where the speed deviation absolute value is out of the predetermined time, it is determined to be the out-of phase, and an out-of-phase detection signal Err is output. In a case where the speed deviation absolute value is less than the threshold, the out-of-phase detection signal is not output.

### (As to speed controller)

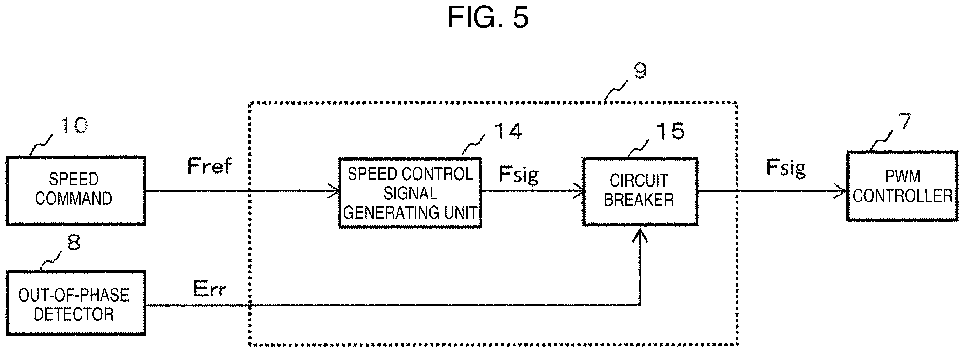

FIG. 5 is a block diagram of the speed controller 9. The speed controller 9 outputs a speed control signal Fsig on the basis of the speed command Fref output from the speed command 10. There is configured to include a speed control signal generating unit 14 and a circuit breaker 15 which outputs or blocks the Fsig input by the speed control signal generating unit 14 to the PWM controller 7 according to the absence/presence of the out-of phase detection signal Err input by the out-of-phase determiner 8.

In general, the speed controller 9 outputs the speed control signal Fsig to the PWM controller 7 on the basis of the speed command 10. However, in a case where the out-of-phase detection signal Err is input by the out-of-phase determiner 8, the circuit breaker 15 blocks the speed control signal Fsig not to be output with respect to the switching circuit 4. Herein, in a case where the speed control signal Fsig is not output to the PWM controller 7, the PWM controller 7 performs the protection operation on the switching circuit 4 such that a gate signal used to turn on/off the switching circuit 4 is always turned off to block the power from being supplied to the rotary machine 5. After the protection operation, if the rotary mechanism should restart, an operation to be performed at the time when out-of-phase occurs has been set in advance within the power conversion device, and the out-of-phase detection signal Err output from the out-of-phase determiner or detector 8 is released after a predetermined time having been arbitrarily set, thus restarting the rotary machine 5. On the contrary, in case that the rotary machine 5 should not restart after the protection operation, information indicating the out-of-phase state as an error state is transformed to the outside by means for communication or the like with an external interface such as a liquid crystal screen, a 7-segment display panel, an LED or the like which is configured to light or blink. In addition, the operation of the error state may be performed after the restarting is performed several times.

The setting of the power conversion device is performed according to a system, for example. In a system in which the rotary machine 5 is not allowed to stop, the restarting is performed automatically even when the system is out-of-phase. In addition, in a case where the out-of-phase occurs, in a system in which an operator stops the rotary machine 5 to perform maintenance, the out-of-phase is regarded as an error state and the restarting is not performed.

### Second embodiment

A second embodiment will be described using FIGS. 3, and 6 to 9.

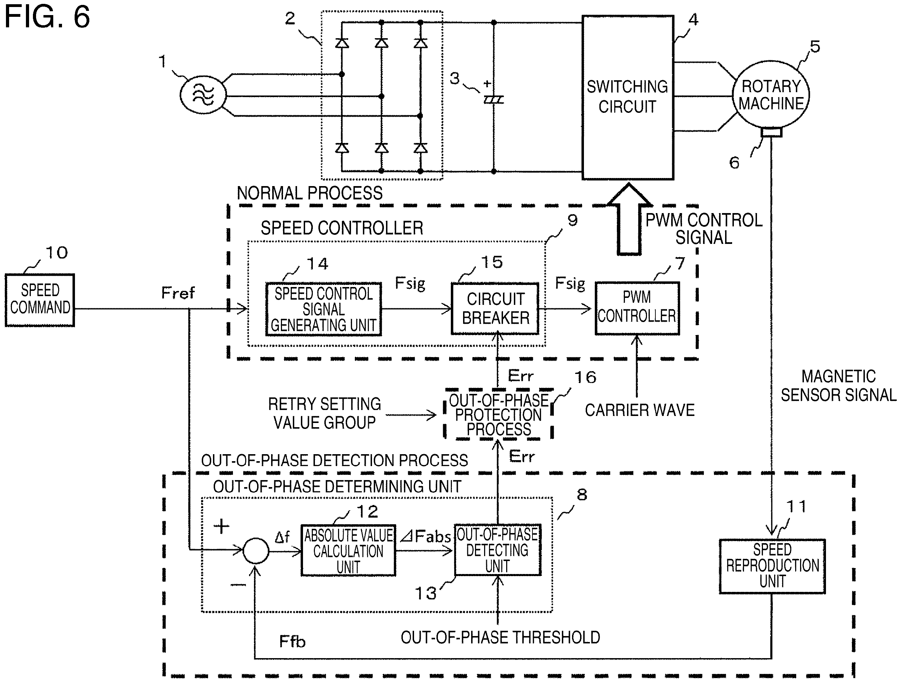

FIG. 6 illustrates a schematic configuration of the power conversion device. This power conversion device is a device which switches an AC power source 1 to a DC power source to supply DC power to a switching circuit 4 and causes the switching circuit 4 to perform a switching operation to operate a rotary machine 5. In a case where the rotary machine 5 is out of phase, the out-of-phase of the rotary machine 5 is detected by a magnetic pole position sensor 6, a speed reproduction unit 11, and an out-of-phase determiner, or detector 8 and performs a protection operation.

### (As to normal process)

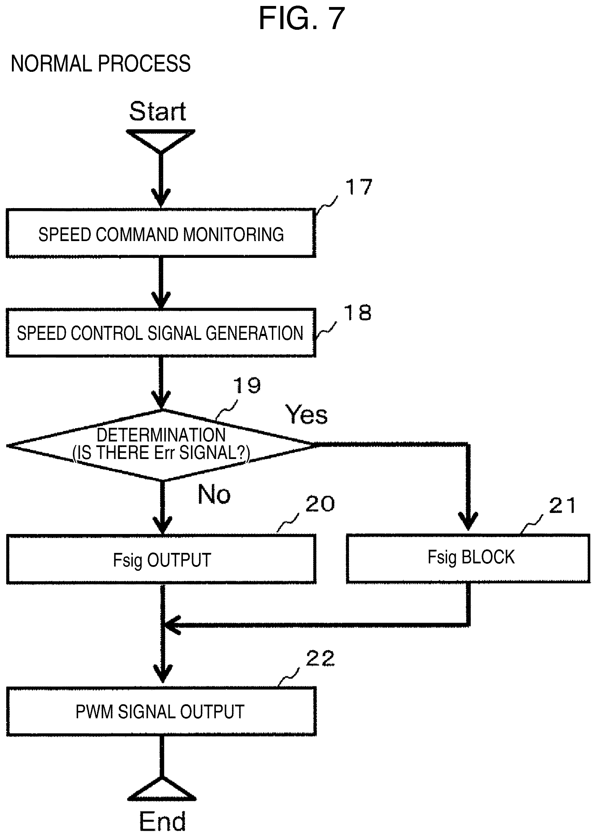

FIG. 7 illustrates a flowchart of a normal process. FIG. 7 is a flowchart indicating a range of the normal process illustrated in FIG. 6. In the normal process, a periodic calculation is performed in a constant processing period and a process from the speed command which to a PWM signal output is performed. Specifically, a speed command monitoring (STEP 17) illustrated in FIG. 7 is performed by the speed control signal generating unit 14 illustrated in FIG. 6, and the speed command Fref is acquired. Then, the speed control signal Fsig is generated in a speed control signal generation (STEP18). In the circuit breaker 15 illustrated in FIG. 6, the speed control signal Fsig is blocked according to the absence/presence of the out-of-phase detection signal Err in determination (STEP 19) illustrated in FIG. 7. Herein, the out-of-phase detection signal Err is acquired by an "out-of-phase determination process" described below. In a case where there is the out-of-phase detection signal Err, the case is regarded as the out-of-phase state and the speed control signal Fsig is blocked as illustrated in Fsig block (STEP21) illustrated in FIG. 7. In a case where there is no out-of-phase detection signal Err, the case is regarded as the normal state and the speed control signal Fsig is output as illustrated in output Fsig (STEP20). In the PWM controller 7 illustrated in FIG. 6, a carrier wave of the frequency set in advance in the microcomputer or in a non-volatile memory such as a flash memory in output PWM signal (STEP22) illustrated in FIG. 7 is compared to the speed control signal Fsig to perform a PWM process and output the PWM control signal to the switching circuit 4. Herein, the frequency of the carrier wave can be changed from the outside by means for communication with an external interface such as a liquid crystal screen, a display panel of a seven segment, and an external device according to a loss of the switching circuit 4 and vibrations and noises caused by resonance with the rotary machine 5.

### (Out-of-phase determination process)

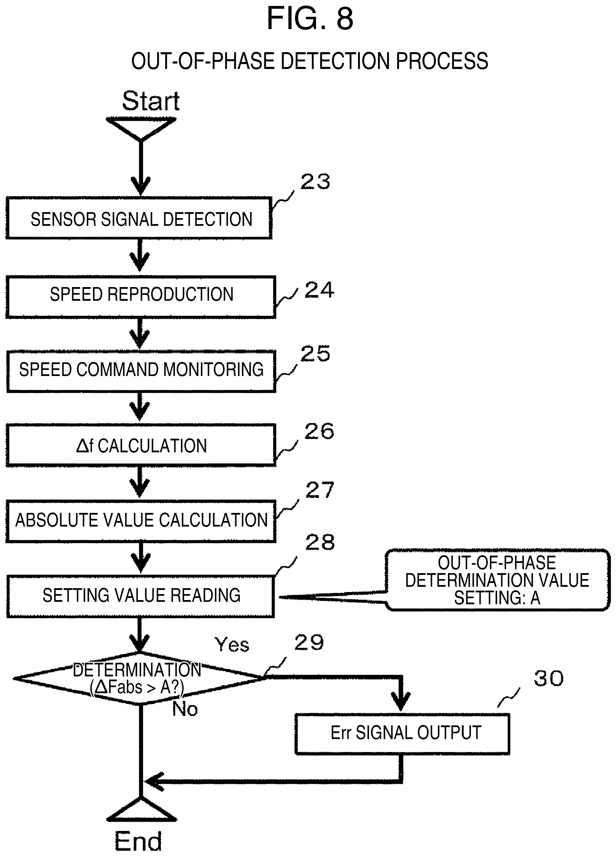

FIG. 8 illustrates a flowchart of the out-of-phase determination process. FIG. 8 is a flowchart indicating a range of the out-of-phase determination process illustrated in FIG. 6. In the out-of-phase process, for example, the process is performed at every falling edge from turning on to off the magnetic pole sensor signal (one-phase signal) of the magnetic pole position sensor 6 illustrated in FIG. 3 to perform the detection of the magnetic pole sensor signal to the out-of-phase protection. Specifically, in sensor signal detection (STEP23) illustrated in FIG. 8 in the speed reproduction unit 11, the falling edge from turning on to off the magnetic pole sensor signal (one-phase signal) which is output by the magnetic pole position sensor 6 illustrated in FIG. 6 is detected, and a detected time is stored every time. Then, the time stored at the previous time from the falling edge of the magnetic pole sensor signal to the falling edge at the current time is calculated in speed reproduction (STEP24), and the detection speed Ffb of the rotary machine 5 is calculated. Next, speed command monitoring (STEP25) illustrated in FIG. 8 is performed to acquire the speed command Fref. Then, in Δf calculation (STEP26), the detection speed Ffb calculated in speed reproduction 24 is subtracted from the speed command Fref, and the speed deviation Δf is calculated. Herein, in consideration of a case where the detection speed Ffb becomes larger than the speed command Fref when a load is suddenly lightened or at the time of deceleration, the speed deviation Δf is set as an absolute value in absolute value calculation (STEP27), and the speed deviation absolute value ΔFabs is calculated. Next, an out-of-phase determination value A is read in setting value reading (STEP28), and the speed deviation absolute value ΔFabs is compared to the out-of-phase determination value A in determination (STEP29). In a case where the speed deviation absolute value ΔFabs is larger, the out-of-phase detection signal Err is output in Err signal output (STEP30). In contrast, in a case where ΔFabs is smaller, the out-of-phase detection signal Err is not output.

### (Out-of-phase protection process)

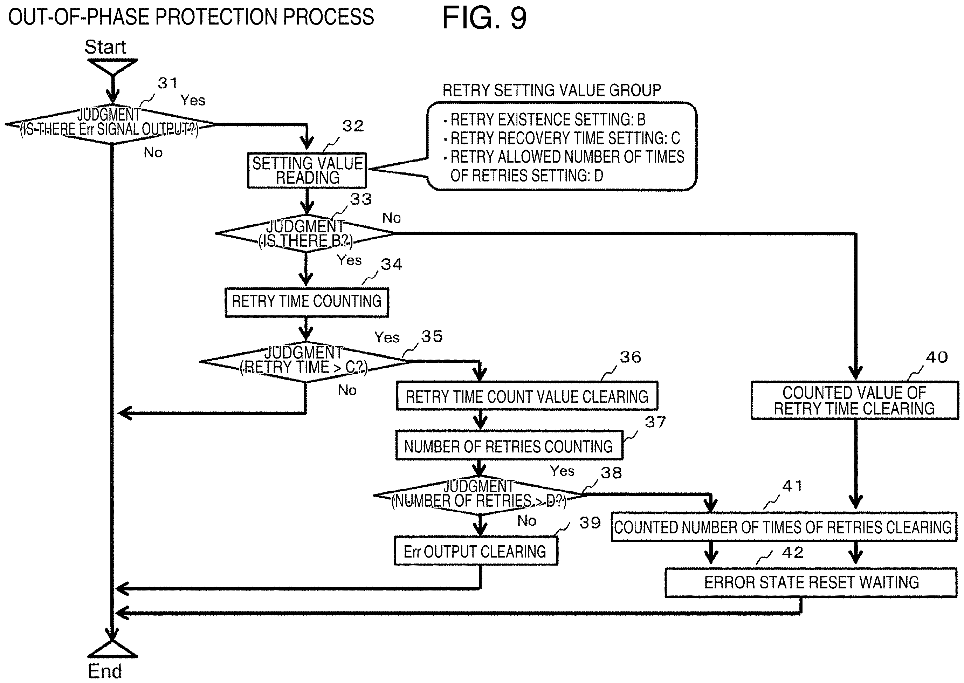

FIG. 9 illustrates an out-of-phase protection process. FIG. 9 is a flowchart indicating details of the out-of-phase protection process 16 of FIG. 6. In determination (STEP31) of FIG. 9, it is determined whether there is the out-of-phase detection signal Err. In the case where there is the out-of-phase detection signal Err, the switching circuit 4 is operated or stopped according to re-try existence setting B, number of re-tries recovery time setting C, and allowed number of times of re-tries setting D which are preset in the micro computer or a non-volatile memory such as a flash memory. In a case where there is no out-of-phase detection signal Err, no operation is performed. Specifically, in a case where there is an out-of-phase detection signal Err, re-try existence setting B, number of re-tries recovery time setting C and allowed number of times of re-tries setting D, are read in setting value reading (STEP32). Next, it is determined whether there is a re-try setting in determination (STEP33). In a case where there is a re-try setting, a re-try time count value is counted in re-try time counting (STEP34). In a case where there is no re-try setting, the re-try time count value counted in re-try time counting (STEP34) performed in the processing period before the previous time is cleared in counted value of re-try time clearing (STEP40). Then, the counted number of times of re-tries is cleared in counted number of times of re-tries clearing (STEP41), and the state becomes a state of waiting for an error state reset in error state reset waiting (STEP42). Herein, the state of waiting for an error state reset means that the process is not transferred to other process until a main power source of the system is turned off and again turned on, or a reset command is input from the outside to release the error. Next, in determination (STEP35), the re-try time count value counted in re-try time counting (STEP34) is compared to a value obtained in re-try recovery time setting C. In a case where the value obtained in re-try recovery time setting C is larger, no operation is performed. In contrast, in a case where the value obtained re-try recovery time setting C is smaller, the re-try time count value counted in re-try time counting (STEP34) is cleared in re-try time count value clearing (STEP36). Next, the number of re-tries is counted in number of re-tries counting (STEP37). Next, in determination (STEP38), the counted number of times of re-tries counted in number of re-tries counting (STEP37) is compared to allowed number of times of re-tries setting D. In a case where the value obtained in allowed number of times of re-tries setting D is larger, the output of the out-of-phase detection signal Err is cleared in Err output clearing (STEP39). In contrast, in a case where the value obtained in allowed number of times of re-tries setting D is smaller, the counted number of times of re-tries is cleared in counted number of times of re-tries clearing (STEP41), and the state becomes a state of waiting for an error state reset in error state reset waiting (STEP42).

### REFERENCE SIGNS LIST

- 1: AC power source
- 2: rectifier
- 3: smoothing capacitor
- 4: switching circuit
- 5: rotary machine
- 6: magnetic pole position sensor
- 7: PWM controller
- 8: out-of-phase determiner
- 9: speed controller
- 10: speed command
- 11: speed reproduction unit
- 12: absolute value calculating unit
- 13: out-of-phase determining unit
- 14: speed control signal generating unit
- 15: circuit breaker
- 16: out-of-phase protection process
- 17: speed command monitoring
- 18: speed control signal generation
- 19: determination (is there Err signal?)
- 20: Fsig output
- 21: Fsig block
- 22: PWM signal output
- 23: sensor signal detection
- 24: speed reproduction
- 25: speed command monitoring
- 26: Δf calculation
- 27: absolute value calculation
- 28: setting value reading
- 29: determination (ΔFabs > A?)
- 30: Err signal output
- 31: determination (is Err signal output?)
- 32: setting value reading
- 33: determination (is there B")
- 34: re-try time counting
- 35: determination (re-try time > C?)
- 36: re-try time count value clearing
- 37: number of re-tries counting
- 38: determination (number of re-tries > D?)
- 39: Err output clearing
- 40: re-try time count value clearing
- 41: counted number of re-tries clearing
- 42: error state reset waiting

## Claims

1. A power conversion device, comprising:
a control device that determines whether a motor is out of phase on the basis of a signal detected by a magnetic pole position sensor attached to any one phase of the motor.

2. The power conversion device according to claim 1,
wherein the control device determines an out-of-phase on the basis of whether the signal detected by the magnetic pole position sensor satisfies a predetermined condition within a predetermined time.

3. The power conversion device according to claim 1,
wherein the control device uses a rising edge at the time when the signal detected by the magnetic pole position sensor is turned on, a falling edge at the time when the signal is turned off, or both of the rising and falling edges.

4. A control method of a power conversion device, comprising:
a control process of determining whether a motor is out of phase on the basis of a signal detected by a magnetic pole position sensor attached to any one phase of the motor.

5. The control method of the power conversion device according to claim 4,
wherein, in the control process, an out-of-phase is determined on the basis of whether the signal detected by the magnetic pole position sensor satisfies a predetermined condition within a predetermined time.

6. The control method of the power conversion device according to claim 4,
wherein, in the control process, a rising edge at the time when the signal detected by the magnetic pole position sensor is turned on, a falling edge at the time when the signal is turned off, or both of the rising and falling edges is used.
